# EUROPÄISCHE PATENTANMELDUNG

(11) **EP 1 258 309 A2**
(43) Veröffentlichungstag der Anmeldung: **20.11.2002**
(21) Anmeldenummer: 01117756.5
(22) Anmeldetag: 31.07.2001
(51) Int. Cl.: B23D 61/02

(54) **Kreissägeblatt mit Wechsel- und Raumzähnen**

(30) Priorität: 16.05.2001 DE 10123752
(71) Anmelder: Ledermann GmbH, 72160 Horb am Neckar (DE)
(72) Erfinder: Gittel, Hans-Jürgen, Dr., 72108 Rottenburg (DE); Fendeleur, Dominique, 67460 Souffelweyersheim (FR); Heusinkveld, Gerhart, 7425 NV Deventer (NL)
(74) Vertreter: HOFFMANN - EITLE

(57) **Zusammenfassung**

Am Umfang eines Kreissägeblatts (7) zum Trennen von Holz, Holzwerkstoffen, Kunststoffen und NE-Metallen sind Gruppen (4) von Sägezähnen angeordnet, wobei jede Gruppe (4) von Sägezähnen zumindest zwei Wechselzähne in Form von Schrägzähnen (2, 3) aufweist, wobei das radial weiter außen gelegene Ende von zumindest zwei der Schrägzähne mit einer Fase (9) ist. Jede Zahngruppe (4) weist außerdem einen Räumzahn (1) mit symmetrischem Querschnitt auf.

## Beschreibung

### Technisches Gebiet

Die vorliegende Erfindung betrifft ein Kreissägeblatt zum Sägen von Holz, Holzwerkstoffen, Kunststoffen und Nichteisen-(NE-)Metallen gemäß dem Oberbegriff des Patentanspruchs 1.

Beim Sägen von Werkstoffen wie Holz, Holzwerkstoffen, Kunststoffen und NE-Metallen werden bei hohen Vorschubgeschwindigkeiten möglichst ausbruchfreie Schnittkanten und glatte Schnittflächen angestrebt.

### Stand der Technik

Kreissägeblätter sind in vielfältigen Ausführungen bekannt, wobei die Sägezähne je nach Verwendungszweck unterschiedlich ausgebildet sind. Der Form der Sägezähne kommt bezüglich der Trenneigenschaften eine besondere Bedeutung zu. So sind beispielsweise Flachzähne, Trapezzähne, Hohlzähne sowie Schrägzähne und Dachzähne bekannt.

Darüber hinaus ist es bekannt, Zähne verschiedener Zahnformen in Zahngruppen anzuordnen. Bei einer Dach-Flachzahngruppe folgt beispielsweise auf einen dachförmigen Zahn ein etwas niedrigerer Flachzahn. In einem Wechselzahn-Kreissägeblatt sind Rechts- und Linksschrägzähne abwechselnd angeordnet. Solche Wechselzähne (d.h. abwechselnde Rechts- und Linksschrägzähne) können mit Fasen versehen sein, wodurch in empfindlichen Materialien wie Acrylglas bessere Schnittergebnisse erzielt werden. Wechselzähne mit Fase sind beispielsweise aus der EP 0 691 170 B1 bekannt.

Aus der WO 96/21545 ist außerdem ein Sägeblatt bekannt, das Zahngruppen mit jeweils zumindest sechs unterschiedlichen Zähnen aufweist, wobei es sich beispielsweise um Trapezzähne handelt. Da jede Zahngeometrie einzeln geschliffen werden muss, sind zumindest sechs Schleifdurchläufe erforderlich, was die Herstellung dieses Sägeblatts sehr aufwendig gestaltet.

Grundsätzlich ist die Stabilität von solchen Kreissägeblättern in axialer Richtung gering. Ihre spezifische Nachgiebigkeit liegt bei ca. 10 µm/N, so dass bereits bei geringen axialen Kräften eine Auslenkung des Zahnes erfolgt. Dies führt dazu, dass der einzelne Zahn im Schnittbild eine unerwünschte Markierung hinterläßt. Außerdem treten Schwingungen im Kreissägeblatt auf, die das Planlaufverhalten nachteilig beeinflussen und zu einem welligen Schnittverlauf und zu einer erhöhten Lärmemission führen.

Aus der DE 1 952 983 ist es bekannt, sogenannte Vorschneidoder Hobelzähne und sogenannte Räumzähne aufeinanderfolgend innerhalb einer Zahngruppe anzuordnen. Auch das Deutsche Gebrauchsmuster GM 74 51 898 beschreibt Zahngruppen aus jeweils einem Räumzahn und mehreren Vorschneidzähnen.

### Darstellung der Erfindung

Der Erfindung liegt das technische Problem zugrunde, ein Kreissägeblatt zum Sägen von Werkstoffen wie Holz, Holzwerkstoffen, Kunststoffen und NE-Metallen mit verbesserter Schnittgüte und Schnittgeschwindigkeit sowie mit einem verbesserten Standweg, d.h. mit verbesserter Verschleißfestigkeit zu schaffen.

Dieses Problem wird gelöst durch ein Kreissägeblatt gemäß dem Patentanspruch 1.

Demzufolge sind am Umfang eines Kreissägeblatts Gruppen von Sägezähnen angeordnet, wobei jede Gruppe von Sägezähnen zumindest zwei Wechselzähne in Form von Schrägzähnen aufweist, wobei das radial weiter außen gelegene Ende von zumindest zwei der Schrägzähne mit einer Fase versehen ist. Jede Zahngruppe weist außerdem einen Räumzahn mit symmetrischem Querschnitt auf.

Die angefasten Schrägzähne haben demnach die Gestalt von radial asymmetrischen Dachzähnen.

Bei dem erfindungsgemäßen Kreissägeblatt erzeugen die Wechselzähne mit Fase ausrißfreie Schnittkanten sowie eine glatte Schnittfläche, während der Räumzahn das Räumen des Schnittspalts übernimmt und den Mittelbereich der Schnittfuge zerspant.

Die Wechselzähne mit Fase und der Räumzahn erzeugen dabei eine Schnittfuge, wobei die Spitzen der Wechselzähne rechts und links über den Flachzahn überstehen. Die Wechselzähne tragen somit nur Material mit den Spitzen ab. Bei geeigneter Ausgestaltung des Räumzahns wirken die Schnittkräfte hier ausschließlich in tangentialer Richtung. Bei geeigneter Ausgestaltung der Wechselzähne heben sich die axialen Schnittkraftkomponenten völlig auf, so dass die erfindungsgemäße Zahngruppe eine gute Führung des Kreissägeblatts bietet. Außerdem ergibt sich aufgrund der geringen auftretenden Axialkräfte ein verringerter Verschleiß der Sägezähne, und die Geräuschentwicklung beim Sägen ist ebenfalls relativ gering, und mögliche Schärffehler können das Kreissägeblatt nicht in Schwingungen versetzen.

Das erfindungsgemäße Kreissägeblatt kommt mit drei unterschiedlichen Zahngeometrien aus, wobei die Herstellung und Instandsetzung insbesondere des Räumzahns sich einfach gestaltet.

Erfindungsgemäße Kreissägeblätter eignen sich bevorzugt für den Einbau in Handmaschinen mit geringer Antriebsleistung und beispielsweise auch in sogenannte Cordless-Maschinen mit einem Akku als Energiequelle.

Durch die besondere Ausgestaltung der Sägezähne kann der Leistungsbedarf des Kreissägeblatts deutlich verringert werden, bzw. eine höhere Vorschubgeschwindigkeit ist möglich. Somit ergibt sich letztlich eine höhere Zerspanungsleistung der Sägemaschine.

Vorteilhafte Weiterbildungen ergeben sich aus den Unteransprüchen.

Jede Zahngruppe des erfindungsgemäßen Kreissägeblatts weist vorzugsweise zwei, vier, sechs oder acht Wechselzähne auf, wobei sich Rechts- und Linkschrägzähne abwechseln. Dabei ist es unerheblich, ob am Anfang einer Gruppe zuerst ein Rechtsschrägzahn oder zuerst ein Linksschrägzahn angeordnet ist.

Der Räumzahn kann dabei an einer beliebigen Position innerhalb der Gruppe angeordnet sein. Vorzugsweise ist der Räumzahn jedoch in Schnittrichtung am Anfang jeder Gruppe angeordnet.

In einer bevorzugten Ausführungsform des erfindungsgemäßen Kreissägeblatts weisen die Wechselzähne einen Achswinkel auf. Dies bietet den besonderen Vorteil, dass die voreilende Kante/Ecke zuerst in das Werkstück eintrifft und das zerspante Material entlang der schräg stehenden Spanfläche leichter abgeleitet wird.

Der Fasenwinkel der Wechselzähne kann zwischen 10° und 60° liegen, und die Breite der Fase bewegt sich zwischen 5% und 40% der Breite des Zahnes.

Weiter wird bevorzugt, dass die Wechselzähne und/oder die Räumzähne des erfindungsgemäßen Kreissägeblatts eine hohle Zahnbrust aufweisen. Der Räumzahn tritt in diesem Fall mit den scharfen Schneidkanten gleichzeitig in den Werkstoff ein, so dass keine Kräfte auftreten, die zu einem seitlichen Auslenken des Flachzahns führen. Bei den Wechselzähnen führt die hohle Zahnbrust zu einer optimalen Schnittqualität. Durch die hohle Form der Spanfläche hat der Wechselzahn sowohl an den Schneidecken als auch über die gesamte Schneidkante eine spitzigere Ausprägung, die leichter ins Werkstück eintritt, somit geringere Schnittkräfte erfordert und eine höhere Vorschubgeschwindigkeit zuläßt.

Zwischen den Zahngruppen ist vorzugsweise ein Spanraum angeordnet, der größer ist als die Abstände zwischen den einzelnen Sägezähnen einer Gruppe. Dieser größere Spanraum kann größere Mengen von Zerspanungsmaterial aufnehmen und aus der Schnittfuge transportieren.

Der Räumzahn kann beliebig ausgestaltet sein, solange er einen symmetrischen Querschnitt aufweist. Beispielsweise können daher Flachzähne, Trapezzähne, Dachzähne oder Hohlzähne als Räumzähne eingesetzt werden. Möglich ist auch die Verwendung von Räumzähnen mit facettierter oder bombierter Kontur. Darüber hinaus ist es auch möglich, in verschiedenen Zahngruppen eines Sägeblatts unterschiedliche Räumzähne vorzusehen.

Dabei hat ein Hohlzahn den Vorteil, dass aufgrund des Hohlschliffs zunächst die beiden Spitzen des Zahns in das Werkstück eindringen und das Kreissägeblatt stabilisieren. Der Trapez- und der Dachzahn haben den Vorteil, dass die in axialer Richtung kräfteneutral sind und durch die Dachspitze bzw. schmale Oberkante im Werkstück geführt werden und so das Sägeblatt stabilisieren. Die axiale Kräfteneutralität ist jeweils dann vorhanden, wenn eine Symmetrie zum Stammblatt des Kreissägeblatts gegeben ist.

Die Wechselzähne sind vorzugsweise etwas breiter ausgestaltet als der Räumzahn, weisen also einen seitlichen Überstand auf, der vorzugsweise etwa 0,3 mm beträgt. Falls der Räumzahn eine bombierte oder facettierte Kontur aufweist, ist jedoch der Räumzahn vorzugsweise breiter als die Wechselzähne.

In einer besonders vorteilhaften Ausgestaltung haben die Spitzen der Wechselzähne in der Projektion die Form eines gleichschenkligen Dreiecks. Dann heben sich die axialen Schnittkraftkomponenten völlig auf, was eine besonders gute Führung des Sägeblatts in der Schnittfuge ergibt.

Der Räumzahn ist stets niedriger als die Wechselzähne, vorzugsweise um etwa 0,2 mm bis 2 mm, wobei dieser Wert der gewählten Mittenspandicke des zu bearbeitenden Werkstücks entspricht.

Durch eine Variation des Überstands des Räumzahns, des seitlichen Überstands der Wechselzähne, des Fasenwinkels und der Fasenbreite der Wechselzähne, der Breite der Räumzähne sowie ggf. des Achswinkels kann das Sägeblatt an den zu zerspanenden Werkstoff, die gewünschte Schnittgeschwindigkeit und den Vorschub angepaßt werden.

### Kurze Beschreibung der Zeichnungen

Nachfolgend wird die Erfindung anhand beispielhaft in den Zeichnungen dargestellten Ausführungsformen näher erläutert.

Im einzelnen zeigen:
Fig. 1 ein erfindungsgemäßes Sägeblatt mit Zahngruppen,
Fig. 2 eine Zahngruppe gemäß einer ersten Ausführungsform des erfindungsgemäßen Sägeblatts,
Fig. 3 eine Zahngruppe gemäß einer zweiten Ausführungsform des erfindungsgemäßen Sägeblatts,
Fig. 4 vier verschiedene Möglichkeiten zur Ausgestaltung eines Räumzahns des erfindungsgemäßen Sägeblatts,
Fig. 5 zwei Wechselzähne und einen Räumzahn gemäß einer dritten (Fig. 5b) und vierten (Fig. 5c) Ausführungsform des erfindungsgemäßen Sägeblatts,
Fig. 6 zwei Wechselzähne mit Fase und Achswinkel, und
Fig. 7 eine schematische Ansicht einer durch ein erfindungsgemäßes Sägeblatt erzeugten Schnittfuge.

### Ausführliche Beschreibung einer bevorzugten Ausführungsform

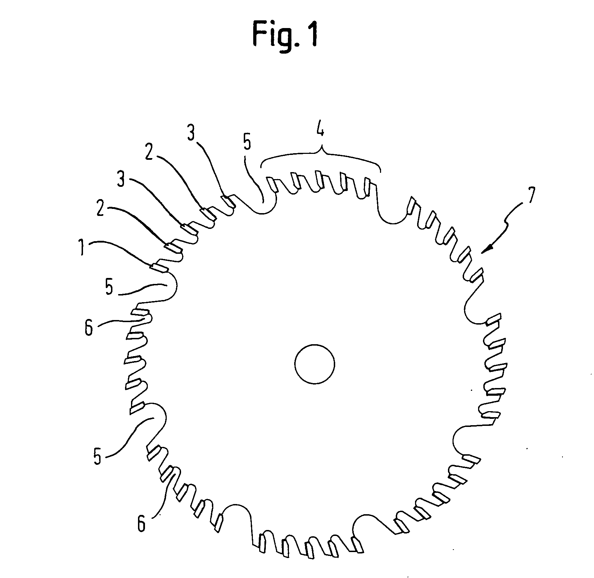

Fig. 1 zeigt eine bevorzugte Ausführungsform eines erfindungsgemäßen Sägeblatts 7. Am Umfang des Sägeblatts 7 sind Gruppen 4 aus Sägezähnen angeordnet. Jede Zahngruppe 4 besteht, in Schnittrichtung gesehen, aus einem Räumzahn 1, einem Rechtsschrägzahn 2, einem Linksschrägzahn 3, einem weiteren Rechtsschrägzahn 2 und einem weiteren Linksschrägzahn 3, die unten noch genauer beschrieben werden. Zwischen jeweils zwei Zahngruppen 4 befindet sich ein Spanraum 5, der einen größeren Teil vom Umfang des Sägeblatts 7 einnimmt als ein Zwischenraum 6 zwischen zwei einzelnen Zähnen 1,2,3 einer Gruppe 4.

Die Wechselzähne 2, 3 durchtrennen das zu bearbeitende Werkstück und erzeugen am Werkstück ausbruchfreie Schnittkanten und eine glatte Schnittfläche. Der Räumzahn 1 zerspant den Mittelbereich der Schnittfuge und räumt den entstehenden Schnittspalt.

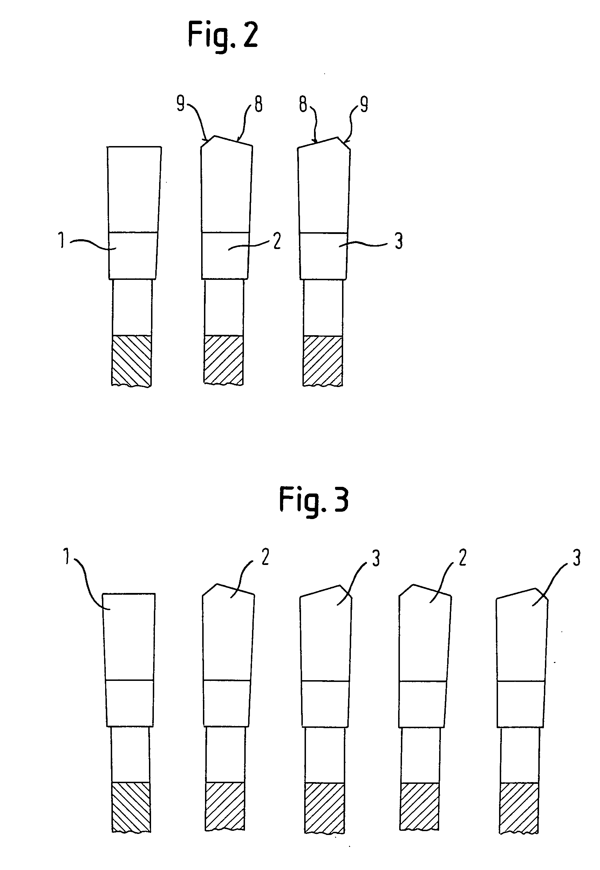

Fig. 2 zeigt eine erste Möglichkeit zur Anordnung von Sägezähnen innerhalb einer Zahngruppe. Im dargestellten Beispiel besteht die Zahngruppe aus einem Räumzahn 1, einem Rechtsschrägzahn 2 und einem Linksschrägzahn 3. Der Räumzahn 1 hat einen symmetrischen Querschnitt und ist im dargestellten Fall ein Flachzahn. Beide Schrägzähne 2, 3 sind am radial weiter außen gelegenen Ende ihrer Schneidkante 8 mit einer Fase 9 versehen.

Fig. 3 zeigt eine weitere Möglichkeit zur Anordnung der Sägezähne innerhalb einer Zahngruppe. Die Zahngruppe weist hier einen Räumzahn sowie vier Wechselzähne 2, 3 auf. Ebenso denkbar sind Zahngruppen mit sechs oder acht Wechselzähnen, die sich innerhalb einer Gruppe vorzugsweise dem Räumzahn anschließen.

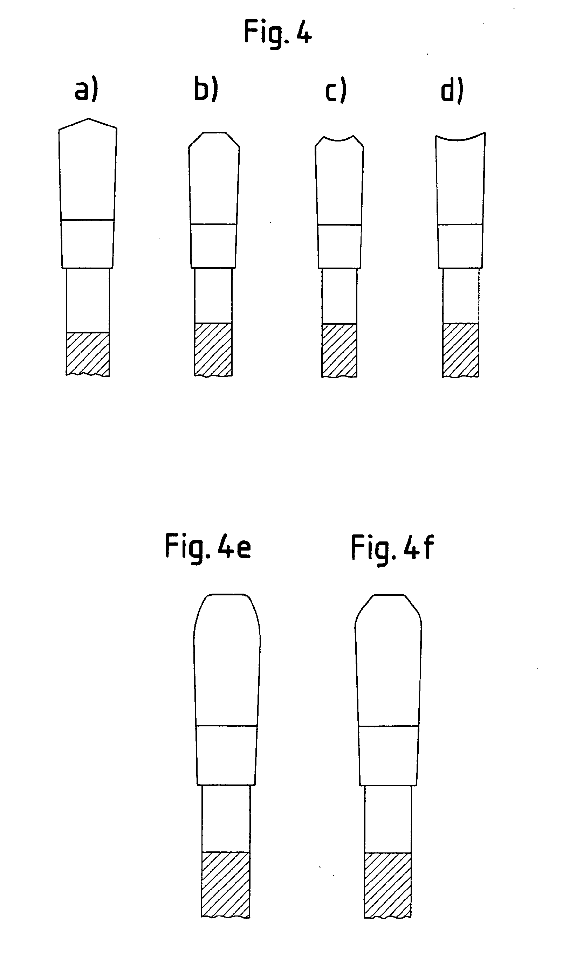

Mögliche Ausgestaltungen des Räumzahns zeigt Fig. 4. Dargestellt sind ein Dachzahn (Fig. 4a), ein Hohlzahn mit Fasen (Fig. 4b), ein Trapezzahn (Fig. 4c) sowie ein Hohlzahn (Fig. 4d).

Fig. 4e zeigt einen Flachzahn mit balliger Kontur, Fig. 4f einen Flachzahn mit facettierter Kontur. Die seitliche facettierte bzw. bogenförmige Kontur beginnt in diesen beiden letzten Fällen an der Umfangsfläche und endet am breitesten Punkt des Zahnes. Der Räumzahn hat bei diesen beiden Varianten eine größere Breite als die Wechselzähne, wobei der Unterschied bis zu 1 mm betragen kann. Diese speziellen Zahnformen haben den Vorteil, dass der Zahn nach dem Eintritt in das Material mit den Umfangsschneiden über die Schnittkante schabt und nur einen dünnen Span abträgt, wodurch ein Verschmieren der Schnittfläche und eine Gratbildung unterbleibt.

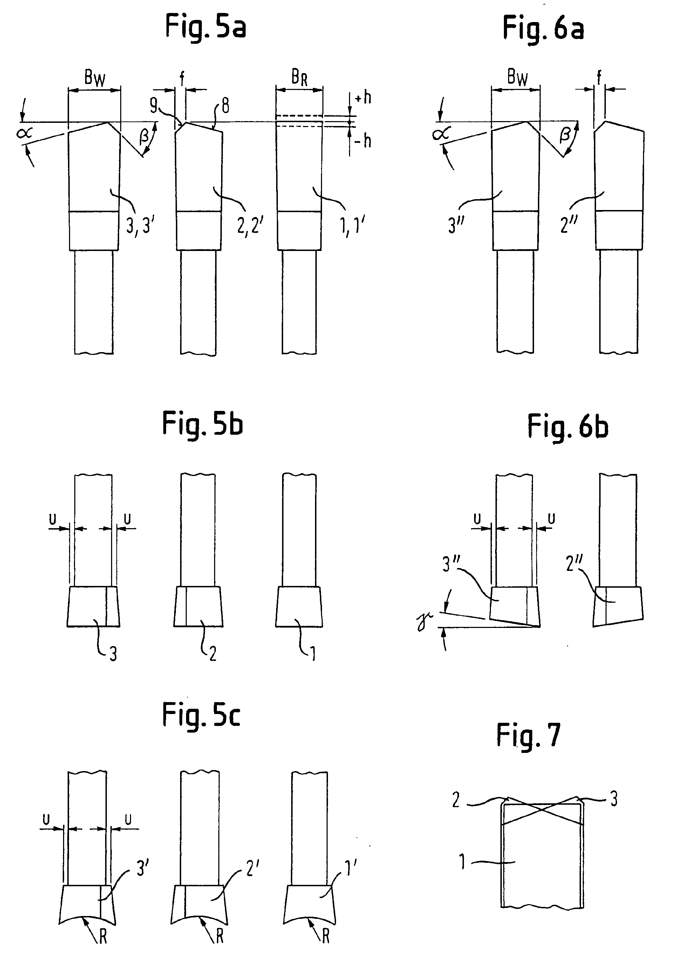

Fig. 5 zeigt zwei Wechselzähne 2, 3 und einen Räumzahn 1. Aus Fig. 5a ist ersichtlich, dass die Schneidkanten 8 der Wechselzähne 2, 3 einen Hauptneigungswinkel α aufweisen, der vorzugsweise bei 15° liegt, sowie eine Fase 9 der Breite f, die im Winkel β verläuft. Der Winkel β liegt vorzugsweise bei 45° .Außerdem ist aus Fig. 5a ersichtlich, dass die Höhe der Schneidkante des Räumzahns 1 um den Betrag h höher oder niedriger liegen kann als die äußerste Spitze der Wechselzähne 2, 3. Die Höhe h beträgt dabei ca. 0,2 mm. Die Breite B_{W} der Wechselzähne 2, 3 ist geringfügig breiter als die Breite B_{R} des Räumzahns 1.

Fig. 5b zeigt eine Draufsicht der Wechselzähne 2, 3 und des Räumzahns 1 aus Fig. 5a. Fig. 5c zeigt eine Draufsicht auf eine weitere Ausführungsform der erfindungsgemäßen Sägezähne, in der die Wechselzähne 2', 3' und der Räumzahn 1' eine hohle Zahnbrust aufweisen, die im Radius R verläuft. Wie oben ausgeführt, führt die hohle Zahnbrust zu einer optimalen Schnittqualität aufgrund geringerer erforderlicher Schnittkräfte und einer daraus folgenden höheren Vorschubgeschwindigkeit.

Fig. 6 zeigt eine weitere Ausführungsform der erfindungsgemäßen Wechselzähne 2", 3". Wie aus der Draufsicht in Fig. 6b deutlich wird, weisen die Wechselzähne 2", 3" in diesem Fall zusätzlich einen Achswinkel γ auf.

Fig. 7 zeigt schließlich schematisch die durch ein erfindungsgemäßes Sägeblatt erzeugte Schnittfuge. Die beiden Wechselzähne 2, 3 und der Räumzahn 1 einer Gruppe ergänzen sich derart, dass die Außenkontur der in Fig. 7 gezeigten Fuge entsteht, in der sich, wie oben beschrieben, die axialen Schnittkraftkomponenten völlig aufheben.

## Patentansprüche

1. Kreissägeblatt (7) zum Trennen von Holz, Holzwerkstoffen, Kunststoffen und NE-Metallen, an dessen Umfang Gruppen (4) von Sägezähnen angeordnet sind, die jeweils zumindest zwei Wechselzähne in Form von Schrägzähnen (2, 3) aufweisen, wobei das radial weiter außerhalb gelegene Ende der ansteigenden Schneidkante (8) von zumindest zwei der Schrägzähne (2, 3) mit einer Fase (9) versehen ist,
**dadurch gekennzeichnet, dass**
jede Zahngruppe (4) einen Räumzahn (1) mit symmetrischem Querschnitt aufweist.

2. Kreissägeblatt (7) nach Anspruch 1, **dadurch gekennzeichnet, dass** jede Zahngruppe (4) genau zwei Wechselzähne (2, 3) aufweist.

3. Kreissägeblatt (7) nach Anspruch 1, **dadurch gekennzeichnet, dass** jede Zahngruppe (4) genau vier Wechselzähne (2, 3) aufweist.

4. Kreissägeblatt (7) nach Anspruch 1, **dadurch gekennzeichnet, dass** jede Zahngruppe (4) genau sechs Wechselzähne (2, 3) aufweist.

5. Kreissägeblatt (7) nach Anspruch 1, **dadurch gekennzeichnet, dass** jede Zahngruppe (4) genau acht Wechselzähne (2, 3) aufweist.

6. Kreissägeblatt (7) nach einem der vorangehenden Ansprüche, **dadurch gekennzeichnet, dass** der Räumzahn (1) in Schnittrichtung gesehen jeweils am Anfang einer Gruppe (4) angeordnet ist.

7. Kreissägeblatt (7) nach einem der vorangehenden Ansprüche, **dadurch gekennzeichnet, dass** die Wechselzähne (2, 3) einen Achswinkel (γ) aufweisen.

8. Kreissägeblatt (7) nach einem der vorangehenden Ansprüche, **dadurch gekennzeichnet, dass** der Fasenwinkel (β) der Wechselzähne (2, 3) zwischen 10° und 60° liegt.

9. Kreissägeblatt (7) nach einem der vorangehenden Ansprüche, **dadurch gekennzeichnet, dass** die Fasenbreite (f) der Wechselzähne (2, 3) zwischen 5% und 40% der Zahnbreite liegt.

10. Kreissägeblatt (7) nach einem der vorangehenden Ansprüche, **dadurch gekennzeichnet, dass** die Wechselzähne (2, 3) und/oder die Räumzähne (1) eine hohle Zahnbrust aufweisen.

11. Kreissägeblatt (7) nach einem der vorangehenden Ansprüche, **dadurch gekennzeichnet, dass** die einzelnen Zahngruppen (4) durch einen Spanraum (5) voneinander getrennt sind, der einen größeren Bereich vom Umfang des Sägeblatts (7) einnimmt als der Zwischenraum (6) zwischen zwei einzelnen Zähnen (1, 2, 3) einer Gruppe (4).

12. Kreissägeblatt (7) nach einem der vorangehenden Ansprüche, **dadurch gekennzeichnet, dass** der Räumzahn (1) ein Flachzahn, ein Trapezzahn, ein Dachzahn oder ein Hohlzahn ist.

13. Kreissägeblatt (7) nach einem der vorangehenden Ansprüche, **dadurch gekennzeichnet, dass** die Wechselzähne (2, 3) um etwa 0,2 mm bis 2 mm breiter sind als der Räumzahn (1).

14. Kreissägeblatt (7) nach einem der Ansprüche 1 bis 12, **dadurch gekennzeichnet, dass** der Räumzahn (1) eine bombierte oder facettierte Kontur aufweist.

15. Kreissägeblatt (7) nach Anspruch 14, **dadurch gekennzeichnet, dass** der Räumzahn (1) um etwa 0,1 mm bis 2 mm breiter ist als die Wechselzähne (2, 3).

16. Kreissägeblatt (7) nach einem der vorangehenden Ansprüche, **dadurch gekennzeichnet, dass** die Spitzen der Wechselzähne (2, 3) in der Projektion die Form eines gleichschenkligen Dreiecks haben.

17. Kreissägeblatt (7) nach einem der vorangehenden Ansprüche, **dadurch gekennzeichnet, dass** der Räumzahn (1) um etwa 0,2 mm bis 2 mm niedriger ist als die Wechselzähne (2, 3).
